Europäisches Patentamt

European Patent Office

Office européen des brevets

(19)

(11) Veröffentlichungsnummer: **0 185 841**
**B1**

(12) **EUROPÄISCHE PATENTSCHRIFT**

(45) Veröffentlichungstag der Patentschrift:
**17.11.88**

(21) Anmeldenummer: **85109560.4**

(22) Anmeldetag: **30.07.85**

(51) Int. Cl.⁴: **F 01 K 23/06,** F 02 C 3/28,
F 02 C 3/30, C 10 J 3/84

(54) Verfahren zur Kühlung von staubförmige Verunreinigungen enthaltendem Partialoxidationsgas, das zur Verwendung in einem kombinierten Gas-Dampfturbineankraftwerk bestimmt ist.

(30) Priorität: **21.12.84 DE 3446715**

(43) Veröffentlichungstag der Anmeldung:
**02.07.86 Patentblatt 86/27**

(45) Bekanntmachung des Hinweises auf die Patenterteilung:
**17.11.88 Patentblatt 88/46**

(84) Benannte Vertragsstaaten:
**BE DE FR GB IT LU NL**

(56) Entgegenhaltungen:
**EP - A - 0 092 856**
**DE - A - 3 319 711**
**GB - A - 2 029 855**
**GB - A - 2 053 262**
**US - A - 3 866 411**

(73) Patentinhaber: **Krupp Koppers GmbH, Altendorfer Strasse 120, D-4300 Essen 1 (DE)**

(72) Erfinder: **Pohl, Hans Christoph, Dr. Dipl.-Ing., Vormholzerstrasse 114, D-5810 Witten (DE)**

ACTORUM AG

## Beschreibung

Die Erfindung betrifft ein Verfahren zur Kühlung von staubförmige Verunreinigungen enthaltendem Partialoxidationsgas, das durch Vergasung (Partialoxidation) von Brennstoffen bei Temperaturen oberhalb des Schlackeschmelzpunktes gewonnen und in einem dem Vergaser nachgeschalteten Kühlsystem unter Dampferzeugung indirekt gekühlt sowie in einer oder mehreren nachgeschalteten Stufen entstaubt wird, wobei das gekühlte und entstaubte Gas nach entsprechender Entschwefelung in der Brennkammer einer Gasturbine eines kombinierten Gas-Dampfturbinenkraftwerkes verbrannt wird.

Bei Verfahren der vorstehend genannten Art ist es bekannt, das aus dem Vergaser austretende heisse Partialoxidationsrohgas in einem Abhitzedampf erzeugenden Kühlsystem indirekt zu kühlen, wobei der dabei anfallende Dampf ganz oder teilweise, gegebenenfalls nach entsprechender Überhitzung, den Dampfturbinen des kombinierten Gas-Dampfturbinenkraftwerkes zugeführt wird. Das Partialoxidationsrohgas wird dagegen nach entsprechender Entstaubung und Entschwefelung mit einer Temperatur von ca. 600 bis 700 °C in die Brennkammer der Gasturbine eingeleitet. Bei diesem Verfahren ist es ferner bekannt, eine Verlegung des Abhitzekessels durch Ansintern des im Rohgasstrom mitgeführten. Flugstaubes dadurch zu verhindern, dass man diese Flugstaubpartikel vor dem Eintritt in den Abhitzekessel durch entsprechende Kühlung des aus dem Vergaser austretenden Rohgases erstarren lässt. Diese Gaskühlung, die auch als Quenching bezeichnet wird, kann beispielsweise durch Berieselung des Rohgases mit kaltem Wasser erfolgen.

In der DE-PS 2 429 993 wird auch bereits ein Verfahren beschrieben, bei dem diese Gaskühlung mit einem Teilstrom des bereits gekühlten Gases durchgeführt wird, der zu diesem Zweck zurückgeführt und in den Rohgasstrom zwischen dem Austritt aus dem Vergaser und dem Eintritt in den Abhitzekessel eingeblasen wird.

Beide Verfahren haben jedoch ihre Nachteile. Beim Quenching mit Wasser erhöht sich zwangsweise der Abwasseranfall, der bei den immer schärfer werdenden Umweltschutzbedingungen einer entsprechenden Aufarbeitung bedarf. Beim Quenching mit rückgeführtem Gas besteht immer die Notwendigkeit, die gesamte Enthalpie des erzeugten Rohgasstromes zwischen dem Vergaser und der Entnahmestelle des Rückführgases durch indirekte Kühlung im Abhitzekessel abzuführen. · Es ist deshalb eine entsprechende Dimensionierung der Wärmeaustauschflächen des Abhitzekessels erforderlich.

Die Beschaffung und der Betrieb solcher Abhitzekessel sind jedoch teuer, weil einerseits grosse Wärmeaustauschflächen aus hochtemperatur- und korrosionsfesten Materialien benötigt werden, wobei der Bedarf an Wärmeaustauschfläche mit abnehmender Gastemperatur am Austritt des Abhitzekessels überproportional steigt. Andererseits wird der Betrieb des Abhitzekessels dadurch verteuert, dass die Wärmeaustauschflächen einer dauernden Verschmutzung durch die Rohgasverunreinigungen unterliegen und daher in Intervallen durch Russbläser bzw. akustische Einrichtungen zu säubern sind. Während der Betriebszeiten zwischen zwei Reinigungsperioden verschlechtert sich die Dampfleistung des Abhitzekessels mit zunehmender Verschmutzung desselben.

Da das erzeugte Partialoxidationsgas in einem nachgeschalteten Gas-Dampfturbinenkraftwerk weiterverarbeitet werden soll, ist ausserdem zu berücksichtigen, dass nach dem heutigen Stand der Technik der Dampfturbinenprozess normalerweise einen schlechteren Wirkungsgrad aufweist als der Gasturbinenprozess. Um dem zu begegnen, besteht die Notwendigkeit, den bei der Abkühlung des Partialoxidationsgases anfallenden Abhitzedampf bei hohem Druck hoch zu überhitzen, was wiederum zu einer Verteuerung des Abhitzekessels beiträgt.

Der Erfindung liegt deshalb die Aufgabe zugrunde, das Verfahren der eingangs genannten Art dahingehend zu verbessern, dass folgende Bedingungen gleichzeitig erfüllt werden:

1. Vermeidung der beim Quenching mit Wasser und/oder rückgeführtem Gas auftretenden Nachteile;

2. Verringerung des Anteils der indirekten Gaskühlung im Abhitzekessel, wobei der Betrieb des Abhitzekessels auf den Bereich höchster Temperaturdifferenzen zwischen dem heissen Gas und dem Kühlsystem des Abhitzekessels beschränkt wird, und

3. möglichst weitgehende Maximierung des Gasturbinenanteils am Prozess der Stromerzeugung unter gleichzeitiger Verringerung des Dampfturbinenanteils.

Das der Lösung dieser komplexen Aufgabe dienende Verfahren der eingangs genannten Art ist erfindungsgemäss dadurch gekennzeichnet, dass das aus dem Vergaser austretende Rohgas vor dem Eintritt in das Kühlsystem durch Einblasen von Stickstoff bis auf eine Temperatur von 1100 bis 900 °C gekühlt wird, wobei die Temperatur des dabei entstehenden stickstoffhaltigen Gasgemisches innerhalb des angegebenen Temperaturbereiches so eingestellt wird, dass dieselbe gerade unterhalb der Erweichungstemperatur der im Gas enthaltenen Flugstaubpartikel liegt, worauf das stickstoffhaltige Gasgemisch im Kühlsystem nur bis auf eine Temperatur von 900–500 °C indirekt gekühlt und daran schliessend durch Zugabe von weiterem Stickstoff bis auf die für die weitere Gasbehandlung erforderliche Temperatur von 500–150 °C gebracht und der zugesetzte Stickstoff im Gasgemisch belassen und gemeinsam mit den übrigen Gasbestandteilen in die Brennkammer auf der Gasturbine eingeleitet wird, wobei der für die Gaskühlung erforderliche Stickstoff der Luftzerlegungsanlage entnommen wird, die den für die Vergasung benötigten Sauerstoff liefert.

Das heisst, beim erfindungsgemässen Verfahren erfolgt die Kühlung des aus dem Vergaser austretenden heissen Rohgases durch Zugabe von Stickstoff in zwei Stufen unter ganz spezifischen Bedingungen. Der hierfür benötigte Stickstoff wird dabei der Luftzerlegungsanlage entnommen, die den für die Vergasung des eingesetzten Brennstoffes erforderlichen Sauerstoff liefert. Deshalb wird das erfindungsgemässe Verfahren durch die Verwendung dieses Stickstoffes, der ja bei der Luftzerlegung bis zum 3,29fachen der Sauerstoffmenge anfallen kann, kostenmässig überhaupt nicht belastet. Der dem Gas zugesetzte Stickstoff wird im Gas belassen und gemeinsam mit diesem in die Brennkammer der Gasturbine eingeleitet, wo er in an sich bekannter Weise eine Herabsetzung der Verbrennungstemperatur sowie des $NO_x$-Gehaltes im erzeugten Rauchgas bewirkt. Hierbei kann ohne weiteres in Kauf genommen werden, dass durch diese Stickstoffzugabe zum erzeugten Partialoxidationsgas der Gasmengenstrom in den nachgeschalteten Behandlungsanlagen entsprechend vergrössert wird.

Bei der Durchführung des erfindungsgemässen Verfahrens ist vorgesehen, dass das stickstoffhaltige Gasgemisch im Kühlsystem nur bis auf eine Temperatur von 900 bis 500 °C indirekt gekühlt und daran anschliessend durch Zugabe von weiterem Stickstoff bis auf die für die weitere Gasbehandlung erforderliche Temperatur von 500 bis 150 °C gebracht wird. Welche Temperatur hierbei im Einzelfall eingestellt wird, richtet sich in erster Linie nach dem Temperaturbereich der nachfolgenden Gasentschwefelung. Durch diese Arbeitsweise wird der Anteil der indirekten Gaskühlung im Abhitzekessel vom kälteren Teil her weiter verringert, während gleichzeitig der Anteil der direkten Gaskühlung durch Stickstoffzugabe weiter vergrössert wird. Dadurch entfällt im Abhitzekessel der spezifisch teurere Niedertemperaturbereich und der indirekte Wärmeaustausch zur Dampferzeugung im Abhitzekessel bleibt auf das wirtschaftlich gut beherrschbare und nutzbare Gebiet hoher Temperaturdifferenzen beschränkt. Hierdurch werden die Anlage- und Betriebskosten des Abhitzekessels entsprechend gesenkt. Ausserdem wird dadurch der Dampfturbinenanteil am Prozess der Stromerzeugung zugunsten des Gasturbinenanteils verkleinert und damit der thermische Gesamtwirkungsgrad der Stromerzeugung verbessert.

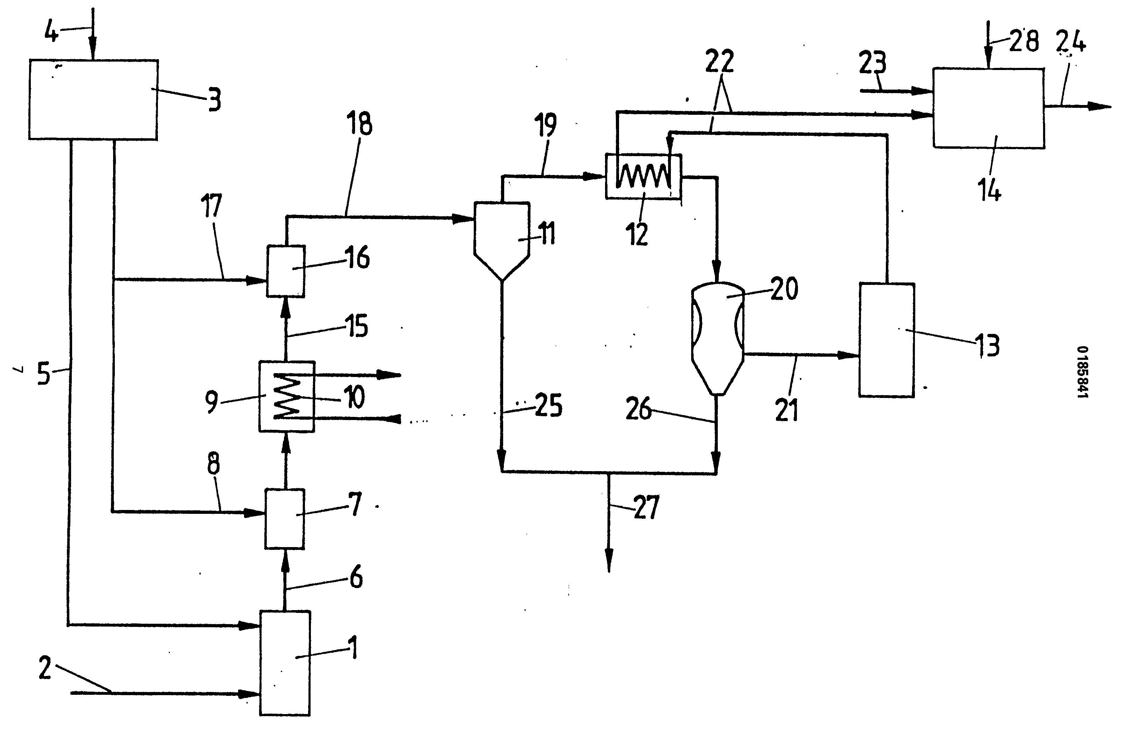

Weitere Einzelheiten des erfindungsgemässen Verfahrens sollen nachfolgend an einem Ausführungsbeispiel mit Hilfe des in der Abbildung dargestellten Fliessschemas erläutert werden. In diesem Fliessschema sind nur die für die Verfahrenserläuterung unbedingt erforderlichen Anlageteile dargestellt, während alle Nebeneinrichtungen, wie z.B. Pumpen, Kompressoren, Ventile usw., nicht dargestellt sind. Ferner wird im Fliessschema auf Einzelheiten der vorgeschalteten Vergasungsanlage sowie des nachgeschalteten Gas-Dampfturbinenkraftwerkes nicht näher eingegangen, da diese Verfahrensstufen nicht Gegenstand der vorliegenden Erfindung sind. Es kann aber davon ausgegangen werden, dass diese Verfahrensstufen sowie sämtliche Stufen des erfindungsgemässen Verfahrens mit an sich bekannten Anlageteilen und Aggregaten ausgeführt werden können.

Bei dem im Fliessschema dargestellten Verfahren wird der eingesetzte Brennstoff, bei dem es sich vorzugsweise um feinkörnige bis staubförmige Kohle handelt, über die Leitung 2 in den Vergaser 1 eingeleitet. Bei diesem handelt es sich vorzugsweise um einen Flugstromvergaser, der bei erhöhtem Druck betrieben werden kann. Dem Vergaser 1 ist die Luftzerlegungsanlage 3 (Tieftemperaturanlage) zugeordnet, der die erforderliche Luft über die Leitung 4 zugeführt wird. Der durch Tieftemperaturzerlegung der Luft erzeugte Sauerstoff wird über die Leitung 5 in den Vergaser 1 eingeleitet, in dem die Vergasung (Partialoxidation) der eingespeisten Kohle bei Temperaturen zwischen 1400 und 1600 °C, d.h. oberhalb des Schlackeschmelzpunktes, erfolgt. Das erzeugte Partialoxidationsrohgas verlässt im vorliegenden Fall mit einer Temperatur von ca. 1300 °C und einem Druck von ca. 30 bar über die Leitung 6 den Vergaser 1. In einer ersten Gasquench 7 wird dem heissen Gas Stickstoff mit etwa Umgebungstemperatur zugesetzt, der aus der Luftzerlegungsanlage 3 stammt und über die Leitung 8 in die Gasquench 7 eingeleitet wird. Der staubfreie gasförmige Stickstoff lässt sich dabei problemlos auf den erforderlichen Betriebsdruck verdichten. Durch die Stickstoffzugabe wird das heisse Gas bis auf eine Temperatur von ca. 1000 °C gekühlt. Diese Temperatur liegt unter der Erweichungstemperatur der im Gas enthaltenen Flugstaubpartikel. Das entsprechend gekühlte Gas gelangt zusammen mit dem zugesetzten Stickstoff sodann in den als Kühlsystem fungierenden Abhitzekessel 9, in dem es durch indirekte Kühlung bis auf eine Temperatur von ca. 700 bis 800 °C gebracht wird. Die Rohrschlange 10 soll dabei die Wärmeübertragungsflächen des Abhitzekessels 9 symbolisch darstellen. Beim Abhitzekessel 9 kann es sich vorzugsweise um einen sogenannten Strahlungskessel handeln. Das aus dem Abhitzekessel 9 austretende Gas-Stickstoffgemisch muss noch soweit abgekühlt werden, dass es nach Durchgang durch den Heisszyklon 11 bei Eintritt in den Rohgas-Reingas-Wärmeaustauscher 12 noch eine hinreichende Temperatur hat, um das aus der Entschwefelungsanlage 13 kommende Reingas auf eine für die Brennkammer 14 geeignete und optimierte Eintrittstemperatur vorzuwärmen. Das Gas-Stickstoffgemisch aus der Leitung 15 wird deshalb zunächst in eine zweite Gasquench 16 eingeleitet, der über die Leitung 17 ein weiterer Teilstrom des in der Luftzerlegungsanlage 4 erzeugten Stickstoffes mit ca. Umgebungstemperatur zugeführt wird.

Das Gas-Stickstoffgemisch verlässt die Gasquench 16 über die Leitung 18 und gelangt in den Heisszyklon 11, in dem die Grobentstaubung des Gas-Stickstoffgemisches erfolgt. Gegebenenfalls kann die zweite Gasquench 16 auch hinter dem Heisszyklon 11 vor dem Rohgas-Reingas-Wärmeaustauscher 12 angeordnet sein. Das aus dem Heisszyklon 11 austretende Gas-Stickstoffgemisch wird über die Leitung 19 in die Feinentstaubung 20 eingeleitet. In der Leitung 19 ist dabei der Rohgas-Reingas-Wärmeaustauscher 12 vorgesehen, in dem das Gas-Stickstoffgemisch in der Leitung 19 von ca. 500 bis auf ca. 200 °C im indirekten Wärmeaustausch mit dem von der Entschwefelungsanlage 13 kommenden Reingas abgekühlt wird. Die Feinentstaubung 20 des Gas-Stickstoffgemisches erfolgt in an sich bekannter Weise mittels eines Waschers oder Desintegrators. Anschliessend gelangt das entstaubte Gas-Stickstoffgemisch über die Leitung 21 in die Entschwefelungsanlage 13, in der mit einem Absorbtions/ Desorbtions-Verfahren die gasförmigen Schwefelverbindungen in an sich bekannter Weise aus dem Gas-Stickstoffgemisch entfernt werden. Der Stickstoffanteil des Gas-Stickstoffgemisches hat dabei keinen negativen Einfluss auf die nachfolgende Entschwefelung. Das gereinigte Gas-Stickstoffgemisch wird als sogenanntes Reingas über die Leitung 22 in die Brennkammer 14 eingeleitet. Vor dem Eintritt in dieselbe erfolgt im Rohgas-Reingas-Wärmeaustauscher 12 eine Wiederaufheizung des Reingases bis auf eine Temperatur von ca. 300–600 °C. Über die Leitung 23 wird die erforderliche Luft und/oder der erforderliche Sauerstoff in die Brennkammer 14 eingeleitet. Das dort durch die Verbrennung erzeugte heisse Druck-Rauchgas wird über die Leitung 24 aus der Brennkammer 14 abgezogen und in der Gasturbine des nachgeschalteten Gas-Dampfturbinenkraftwerkes entspannt und damit zur Stromerzeugung genutzt. Die im Heisszyklon 11 und der Feinentstaubung 20 aus dem Gas-Stickstoffgemisch abgeschiedenen Verunreinigungen werden über die Leitungen 25 und 26 abgezogen und gelangen in die Leitung 27, durch die sie aus dem Verfahren ausgeschleust werden.

Im Hinblick auf einen möglichst niedrigen $NO_x$-Gehalt im erzeugten Druck-Rauchgas ist es zweckmässig, die Temperatur in der Brennkammer 14 im Bereich zwischen ca. 600 und ca. 700 °C einzustellen. Zum Zwecke einer optimalen Temperatureinstellung kann deshalb gegebenenfalls über die Leitung 28 in an sich bekannter Weise Stickstoff in die Brennkammer 14 eingeblasen werden, der ebenfalls aus der Luftzerlegungsanlage 3 stammt.

## Patentanspruch

Verfahren zur Kühlung von staubförmige Verunreinigungen enthaltendem Partialoxidationsgas, das durch Vergasung (Partialoxidation) von Brennstoffen bei Temperaturen oberhalb des Schlackeschmelzpunktes gewonnen und in einem dem Vergaser nachgeschalteten Kühlsystem unter Dampferzeugung indirekt gekühlt wird sowie in einer oder mehreren nachgeschalteten Stufen entstaubt wird, wobei das gekühlte und entstaubte Gas nach entsprechender Entschwefelung in der Brennkammer einer Gasturbine eines kombinierten Gas-Dampfturbinenkraftwerkes verbrannt wird, dadurch gekennzeichnet, dass das aus dem Vergaser austretende Rohgas vor dem Eintritt in das Kühlsystem durch Einblasen von Stickstoff bis auf eine Temperatur von 1100 bis 900 °C gekühlt wird, wobei die Temperatur des dabei entstehenden stickstoffhaltigen Gasgemisches innerhalb des angegebenen Temperaturbereiches so eingestellt wird, dass dieselbe gerade unterhalb der Erweichungstemperatur der im Gas enthaltenen Flugstaubpartikel liegt, worauf das stickstoffhaltige Gasgemisch im Kühlsystem nur bis auf eine Temperatur von 900–500 °C indirekt gekühlt und daran anschliessend durch Zugabe von weiterem Stickstoff bis auf die für die weitere Gasbehandlung erforderliche Temperatur von 500–150 °C gebracht und der zugesetzte Stickstoff im Gasgemisch belassen und gemeinsam mit den übrigen Gasbestandteilen in die Brennkammer der Gasturbine eingeleitet wird, wobei der für die Gaskühlung erforderliche Stickstoff der Luftzerlegungsanlage entnommen wird, die den für die Vergasung benötigten Sauerstoff liefert.

## Claim

Process for cooling partial oxidation gas, containing pulverulent impurities, which is produced by gasification (partial oxidation) of fuels at temperatures above the slag melting point, and is indirectly cooled in a cooling system downstream of the gasifier with generation of steam, and is dedusted in one or more subsequent stages, the cooled and dedusted gas, after appropriate desulphurization, being burnt in the combustion chamber of a gas turbine of a combined gas-steam turbine power plant, characterized in that the crude gas leaving the gasifier is cooled before entry into the cooling system to a temperature of 1100 to 900 °C by the injection of nitrogen, the temperature of the resulting gas mixture, which contains nitrogen, being adjusted with the given temperature range so that is lies just below the fusion temperature of the fine dust particles contained in the gas, the nitrogen-containing gas mixture in the cooling system thereupon only being cooled indirectly to a temperature of 900–500 °C and subsequently being brought to the temperature of 500–150 °C required for the further gas treatment, by adding further nitrogen, and the added nitrogen being retained in the gas mixture and being introduced into the combustion chamber of the gas turbine together with the other gas constituents, the nitrogen necessary for gas cooling being taken from the air separation plant which supplies the oxygen required for gasification.

## Revendication

Procédé pour refroidir du gaz d'oxydation partielle contenant des impuretés sous forme de poussières, qui est obtenu par gazéification (oxydation partielle) de combustibles à des températures au-dessus du point de fusion des scories et est refroidi moyennant une génération de vapeur par méthode indirecte dans un système de refroidissement monté à la suite du groupe de gazéification ainsi que dépoussiéré en une ou plusieurs phases installées en sortie, tandis que le gaz refroidi et dépoussiéré est brûlé après une désulfuration en conséquence dans la chambre de combustion d'une turbine à gaz d'une centrale thermique mixte à turbines à gaz et à vapeur, caractérisé par le fait qu'avant son admission dans le système de refroidissement, le gaz brut sortant du groupe de gazéification est refroidi jusqu'à une température de 1100 à 900 °C par injection d'azote, la température du mélange de gaz ainsi formé contenant de l'azote étant ajustée à l'intérieur des limites de températures indiquées de telle sorte qu'elle se situe en-dessous de la température de ramollissement des particules de poussières volantes contenues dans le gaz, puis que le mélange de gaz contenant de l'azote ne soit plus refroidi indirectement dans le système de refroidissement qu'à une température de 900 à 500 °C et qu'ensuite il soit porté par addition d'azote supplémentaire à la température requise de 500 à 150 °C pour la suite du traitement des gaz et que l'azote ajouté au mélange de gaz y soit conservé et dirigé, ensemble avec les autres constituants du gaz, sur la chambre de combustion de la turbine à gaz, l'azote nécessaire pour refroidir le gaz étant prélevé à l'installation de fractionnement de l'air qui fournit l'oxygène nécessaire à la gazéification.

0185841